# EUROPÄISCHE PATENTSCHRIFT

(11) **EP 2 225 316 B1**
(45) Veröffentlichungstag und Bekanntmachung des Hinweises auf die Patenterteilung: **13.03.2013**
(21) Anmeldenummer: 08864111.3
(22) Anmeldetag: 16.12.2008
(51) Int. Cl.: C08K 3/32, C08K 5/5313, C08L 55/02, C08L 69/00

(54) **FLAMMGESCHÜTZTE SCHLAGZÄHMODIFIZIERTE POLYCARBONAT-ZUSAMMENSETZUNGEN**
FLAME-PROOF IMPACT RESISTANT-MODIFIED POLYCARBONATE COMPOSITIONS
COMPOSITIONS POLYCARBONATE IGNIFUGÉES À RÉSILIENCE MODIFIÉE

(30) Priorität: 20.12.2007 DE 102007061759
(43) Veröffentlichungstag der Anmeldung: 08.09.2010
(73) Patentinhaber: Bayer MaterialScience AG, 51368 Leverkusen (DE)
(72) Erfinder: ECKEL, Thomas, 41540 Dormagen (DE); TASCHNER, Vera, 50823 Köln (DE); WENZ, Eckhard, 50679 Köln (DE); WITTMANN, Dieter, 51375 Leverkusen (DE)
(86) Internationale Anmeldenummer: PCT/EP2008/010695
(87) Internationale Veröffentlichungsnummer: WO 2009/080245

(56) Entgegenhaltungen:
- EP-A- 1 624 015
- DE-A1- 10 234 420
- US-A1- 2007 082 995

## Beschreibung

Die vorliegende Erfindung betrifft schlagzähmodifizierte Polycarbonat-Zusammensetzungen, welche ein Pfropfpolymerisat hergestellt im Verfahren der Emulsionspolymerisation und ein Salz einer Phosphinsäure enthalten, die Verwendung der Polycarbonat-Zusammensetzungen zur Herstellung von Formkörpern und die Formkörper selbst.

WO-A 2005/044906 offenbart thermoplastische Formmassen enthaltend mindestens ein Metallsalz der Hypophosphorsäure und mindestens ein aromatisches Polycarbonatharz und deren Mischung mit einem styrolhaltigen Pfropfcopolymerharz mit einem Kautschukanteil von 5-15%. Die Anteile des styrolhaltigen Pfropfcopolymers betragen 10-40 Gew.%. Die erhaltenen Formmassen zeichnen sich durch gute Flammwidrigkeit, hohe thermische Stabilität unter Verarbeitungsbedingungen und guter Wetter-Resistenz aus. Aufgrund des niedrigen Kautschukanteiles sind andere Eigenschaften, insbesondere mechanische Eigenschaften auf einem niedrigen Niveau.

WO-A 1999/57192 beschreibt thermoplastische Formmassen enthaltend 5-96 Gew.% eines Polyesters oder Polycarbonat, 1-30 Gew% eines Phosphinsäuresalzes und/oder eines Diphosphinsäuresalzes und/oder deren Polymere, 1-30 Gew.% mindestens eines organischen phosphorhaltigen Flammschutzmittels, und mögliche weitere Additive.

DE-A 102004049342 offenbart thermoplastische Formmassen enthaltend 10-98 Gew.% thermoplastisches Polymer, 0,01 - 50 Gew% hochverzweigtes Polycarbonat oder hochverzweigter Polyesters oder deren Mischungen, 1-40 Gew.% halogenfreies Flammschutzmittels ausgewählt aus der Gruppe der P-haltigen oder N-haltigen Verbindungen oder der P-N-Kondensate oder deren Mischungen, und mögliche weitere Additive.

JP-A 2001-335699 beschreibt flammgeschützte Harzzusammensetzungen enthaltend zwei oder mehrere thermoplastische Harze ausgewählt aus Styrolharz, aromatisches Polyesterharz, Polyamidharz, Polycarbonatharz und Polyphenylenetherharz und ein oder mehrere (an)organische Phosphinsäuresalze, und mögliche weitere Additive.

JP-A 2001-261973 (Daicel Chemical Industries Ltd.) beschreibt Zusammensetzungen aus thermoplastischen Harzen und (an)organischen Phosphinsäuresalzen. Als Beispiel ist eine Kombination angeführt aus PBT, Calciumphosphinat und PTFE.

JP-A 2002-161211 offenbart Zusammensetzungen aus thermoplastischen Harzen und Flammschutzmitteln wie Salzen der Phosphin- und Phosphorsäure und deren Derivate. Als Beispiel ist eine Kombination angeführt aus PBT, ABS, Polyoxyphenylen, Calciumphosphinat, einem Organophosphat und Glasfasern.

Nach dem Stand der Technik übliche Flammschutzmittel für Polycarbonat/ABS-Blends sind organische, aromatische Phosphate. Diese Verbindungen können niedermolekular, als Gemisch verschiedener Oligomeren oder als Gemisch von Oligomeren mit niedermolekularen Verbindungen vorliegen (z.B. WO-A 99/16828 und WO-A 00/31173). Der guten Wirksamkeit als Flammschutzmittel steht die stark weich machende Wirkung dieser Verbindungen auf die polymeren Bestandteile als Nachteil entgegen, so dass die Wärmeformbeständigkeit dieser Formmassen für viele Anwendungen nicht zufriedenstellend ist.

Aufgabe der vorliegenden Erfindung ist die Bereitstellung von schlagzähmodifizierten Polycarbonat-Formmassen mit einer optimalen Kombination aus hoher Wärmeformbeständigkeit, guten Chemikalienbeständigkeit und gutem Flammschutz, insbesondere im Glühdrahttest nach IEC 60695-2-12.

Es wurde nun überraschend gefunden, dass Formmassen bzw. Zusammensetzungen enthaltend A) Polycarbonat, B) kautschukmodifiziertes Pfropfpolymerisat hergestellt im Verfahren der Emulsionspolymerisation und C) ein Salz einer Phosphinsäure das gewünschte Eigenschaftsprofil aufweisen.

Es wurde somit überraschend gefunden, dass Zusammensetzungen enthaltend
A) 73 bis 98 Gew.-Teile, besonders bevorzugt 82 bis 91 Gew.-Teile (jeweils bezogen auf die Summe der Gewichtsteile der Komponenten A+B+C) aromatisches Polycarbonat und/oder aromatisches Polyestercarbonat,
B) 2 bis 6 Gew.-Teile (jeweils bezogen auf die Summe der Gewichtsteile der Komponenten A+B+C) kautschukmodifiziertes Pfropfpolymerisat hergestellt im Verfahren der Emulsionspolymerisation,
C) 0,1 bis 30 Gew.-Teile, bevorzugt 1 bis 15 Gew.-Teile, besonders bevorzugt 7 bis 12 Gew.-Teile (jeweils bezogen auf die Summe der Gewichtsteile der Komponenten A+B+C) eines Salzes einer Phosphinsäure,
D) 0 bis 20 Gew.-Teile (bezogen auf die Summe der Gewichtsteile der Komponenten A+B+C= 100) kautschukfreies Vinyl(Co)Polymerisat und/oder Polyalkylenterephthalat, bevorzugt ist die Zusammensetzung frei von kautschukfreiem Vinyl(Co)Polymerisat und/oder Polyalkylenterephthalat,
E) 0 bis 50 Gew.-Teile, bevorzugt 0,5 bis 25 Gew.-Teile (jeweils bezogen auf die Summe der Gewichtsteile der Komponenten A+B+C = 100) Zusatzstoffe, mindestens ein Antidriffingmittel,
wobei alle Gewichtsteilangaben in der vorliegenden Anmeldung so normiert sind, dass die Summe der Gewichtsteile der Komponenten A+B+C in der Zusammensetzung 100 ergeben,
die oben genannte technische Aufgabe lösen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 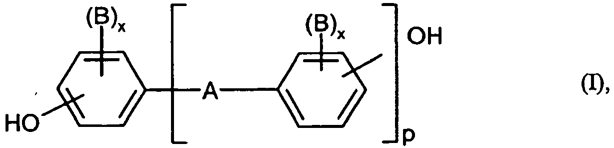 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 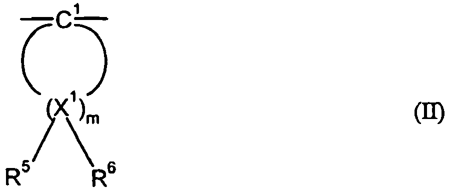 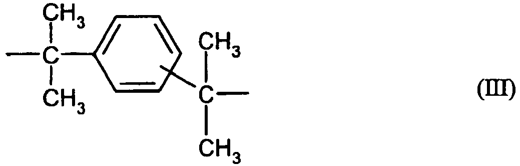
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).
Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol%, und 10 mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol%, bezogen im Falle der phenolischen Kettenabbrecher auf Mol Diphenol und im Falle von Monocarbonsäurechlorid-Kettenabbrecher auf Mol Dicarbonsäuredichlorid.
Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol%, insbesondere bis zu 80 mol%, besonders bevorzugt bis zu 50 mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
- B.1: 5 bis 95 Gew.%, vorzugsweise 30 bis 90 Gew.%, wenigstens eines Vinylmonomeren auf
- B.2: 95 bis 5 Gew.%, vorzugsweise 70 bis 10 Gew.% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylacetat-Kautschuke.

Die Pfropfgrundlage B.2 hat im allgemeinen eine mittlere Teilchengröße (d₅₀-Wert) von 0,05 bis 5 µm, vorzugsweise 0,1 bis 0,8 µm, besonders bevorzugt 0,2 bis 0,4 µm.

Monomere B.1 sind vorzugsweise Gemische aus
- B.1.1: 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Bevorzugte Pfropfgrundlagen B.2 sind Dienkautschuke (beispielsweise auf Basis Butadien und Isopren) oder Gemische von Dienkautschuken. Unter Dienkautschuke im erfindungsgemäßen Sinne sind auch Copolymerisate von Dienkautschuken oder deren Gemischen mit weiteren copolymerisierbaren Monomeren (z.B. gemäß B.1.1 und B.1.2) zu verstehen. Die Pfropfgrundlagen B.2 weisen im allgemeinen eine Glasübergangstemperatur von < 10°C, vorzugsweise < 0°C, besonders bevorzugt < -10°C auf.

Vorzugsweise weist das Pfropfpolymerisat aus den Komponenten B.1 und B.2 eine Kern-Schale-Struktur auf, wobei die Komponente B.1 die Schale bildet (auch als Hülle bezeichnet) und die Komponente B.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate B werden durch radikalische Polymerisation durch Emulsions-polymerisation hergestellt. Vorzugsweise erfolgt das Emulsionspolymerisationsverfahren durch Redox-Initiierung mit einem Initiatorsystem aus organischem Hydroperoxid und Ascorbinsäure, wie es beispielsweise in US 4 937 285 beschrieben ist.

Der Gelanteil der Pfropfgrundlage B.2 beträgt mindestens 40 Gew.%, vorzugsweise mindestens 70 Gew.% (in Toluol gemessen).

Besonders bevorzugte Pfropfpolymerisate B sind ABS-Polymerisate (Emulsions-ABS), welche vorzugsweise eine Kern-Schale-Struktur aufweisen, wobei die Schale aufgebaut ist aus den Komponenten Styrol (B.1.1) und Acrylnitril (B.1.2) und einen Kern aus Polybutadien. Derartige ABS-Polymerisate sind dem Fachmann bekannt und z.B. in Ullmanns Enzyklopädie der Technischen Chemie, Bd. 19 (1980), S. 280 ff. beschrieben.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5 Gew.%, insbesondere 0,05 bis 2 Gew.%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.% aufweisen.

Geeignete Silikonkautschuke gemäß B.2. können durch Emulsionspolymerisation hergestellt werden, wie beispielsweise in US 2891920 und US 3294725 beschrieben. Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen B.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).Silikonacrylat-Kautschuke sind bekannt und beispielsweise beschrieben in US 5,807,914, EP 430134 und US 4888388. Vorzugsweise eingesetzt wird ein im Emulsionspolymerisation hergestelltes Pfropfpolymer mit B.1 Methylmetacrylat und B.2 Silikonacrylat-Komposit-Kautschuk.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

### Komponente C

Unter dem Salz einer Phosphinsäure (Komponente C) im erfindungsgemäßen Sinne ist das Salz einer Phosphinsäure mit einem beliebigen Metallkation zu verstehen. Es können auch Mischungen von Salzen eingesetzt werden, die sich in ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe; vorzugsweise Al³⁺) und/oder der 2., 7_{.} oder 8_{.} Nebengruppe (vorzugsweise Zn²⁺, Mn²⁺, Fe²⁺, Fe³⁺) des Periodensystems ist.

Vorzugsweise wird ein Salz oder eine Mischung von Salzen einer Phosphinsäure der Formel (IV) eingesetzt, 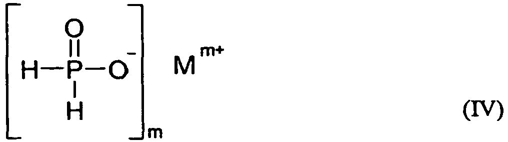 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen M⁺= Li⁺, Na⁺, K⁺,
für m = 2 die Metallkationen M²⁺ = Mg²⁺, Ca²⁺,Sr²⁺, Ba²⁺ und
für m = 3 die Metallkationen M³⁺ = Al³⁺,
höchst bevorzugt sind Ca²⁺ (m = 2) und Al³⁺ (m = 3).

In einer bevorzugten Ausführungsform ist die mittlere Teilchengröße d₅₀ des Phosphinsäuresalzes (Komponente C) kleiner als 80 µm, vorzugsweise kleiner als 60 µm, besonders bevorzugt ist d₅₀ zwischen 10 µm und 55 µm. Die mittlere Teilchengröße d₅₀ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d₅₀ unterscheiden.

Diese Anforderungen an die Teilchengröße d₅₀ des Phosphinsäuresalzes sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden. Vorzugsweise sind die erfindungsgemäßen Zusammensetzungen frei von phosphorhaltigen Flammschutzmitteln ausgewählt aus den Gruppe der Mono- und oligomeren Phosphor- und Phosphonsäureester, Phosphonatamine und Phosphazene. Diese anderen phosphorhaltigen Flammschutzmitteln wie beispielsweise die Mono- und oligomeren Phosphor- und Phosphonsäureester besitzen gegenüber den Phosphinsäuresalzen den Nachteil, dass diese die Wärmeformbeständigkeit der Formmassen herabsetzen.

### Komponente D

Die Komponente D umfasst ein oder mehrere thermoplastische Vinyl(Co)Polymerisate D.1 und/oder Polyalkylenterephthalate D.2.

Geeignet sind als Vinyl(Co)Polymerisate D. Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- D.1.1: 50 bis 99 Gew.-Teilen, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- D.1.2: 1 bis 50 Gew.-Teilen, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D.1 sind harzartig, thermoplastisch und kautschukfrei. Besonders bevorzugt ist das Copolymerisat aus D.1.1 Styrol und D.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente D.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.%, vorzugsweise mindestens 90 Gew.%, bezogen auf die Dicarbonsäurekomponente Terephthalsäurereste und mindestens 80 Gew.%, vorzugsweise mindestens 90 mol%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.%, vorzugsweise 1 bis 30 Gew.%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente E

Die Zusammensetzung kann weitere handelsübliche Zusatzstoffe gemäß Komponente E) wie Flammschutzsynergisten, von Komponente B) verschiedene kautschukmodifizierte Pfropfpolymerisate E*, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, CaCO₃ und Glasschuppen) sowie Farbstoffe und Pigmente enthalten.

Die von Komponente B verschiedenen Pfropfpolymerisate E* werden durch Masse, Suspensions- oder Lösungspolymerisation, hergestellt. Bevorzugt sind die erfmdungsgemäßen Zusammensetzungen frei an von Komponente B verschiedener Pfropfpolymerisate E*.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffhungen und Gehäuse für Gartengeräte.

Die folgenden Beispiele dienen der weiteren Erläuterung der Erfindung.

### Beispiele

### Komponente A-1

Lineares Polycarbonat auf Basis Bisphenol A mit einer relativen Lösungsviskosität von ηᵣₑₗ = 1,28, gemessen in CH₂Cl₂ als Lösungsmittel bei 25°C und einer Konzentration von 0,5 g/100 ml.

### Komponente A-2

Lineares Polycarbonat auf Basis Bisphenol A mit einer relativen Lösungsviskosität von ηᵣₑₗ = 1,20, gemessen in CH₂Cl₂ als Lösungsmittel bei 25°C und einer Konzentration von 0,5 g/100 ml.

### Komponente B

ABS-Pfropfpolymerisat mit Kern-Schale-Struktur, hergestellt durch Emulsions-Polymerisation von 43 Gew.% bezogen auf das ABS-Polymerisat einer Mischung aus 27 Gew.% Acrylnitril und 73 Gew.% Styrol in Gegenwart von 57 Gew.% bezogen auf das ABS-Polymerisat eines teilchenförmig vernetzten Polybutadienkautschuks (mittlerer Teilchen-durchmesser d₅₀ = 0,35 µm).

### Komponente C

### Komponente C-1 (Vergleich)

### Bisphenol-A-basierendes Oligophosphat

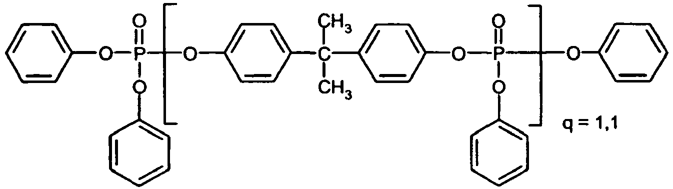

### Komponente C-2

Calciumphosphinat, mittlere Teilchengröße d₅₀= 50 µm.

### Komponente E

| | |
|---|---|
| Komponente E-1: | Polytetrafluorethylen (PTFE) |
| Komponente E-2: | Pentaerythrittetrastearat |
| Komponente E-3: | Irganox B900 (Hersteller: Ciba Specialty Chemicals Inc., Basel, Schweiz) |

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s).

Die Charakterisierung erfolgt gemäß DIN ISO 306 (Vicat-Erweichungstemperatur, Verfahren B mit 50 N Belastung und einer Heizrate von 120 K/h), ISO 4599 (Environmental Stress Cracking (ESC)-Test gegen Toluol:Isopropanol 60:40, bei 2,4% und 0,8% Randfaserdehnung, in der Tabelle ist die Zeit bis zum Bruch angegeben), UL 94 V (an Stäben der Abmessung 127 x 12,7 x 1,5 mm gemessen) und IEC 60695-2-12 (Glühdrahttest; angegeben ist die Glühdrahtentflammbarkeitszahl GWFI bei 2,0 mm Dicke).

Aus Tabelle 1 ist ersichtlich, dass nur die Zusammensetzung im Beispiel 2 mit der Kombination aus Polycarbonat, Emulsions-ABS und Calciumphosphinat die erfindungsgemäße Aufgabe löst, d.h. eine Kombination aus hoher Wärmeformbeständigkeit, guter Chemikalienbeständigkeit und guter Performance im UL94V-Test und im Test nach IEC 60695-2-12.

**Tabelle 1: Zusammensetzungen und ihre Eigenschaften**

| **Zusammensetzung** | | **1 (Vgl.)** | **2** |
|---|---|---|---|
| **A-1** | Gew.-Tle. | 70,2 | 70,2 |
| **A-2** | Gew.-Tle. | 24,5 | 24,5 |
| **B** | Gew.-Tle. | 3,0 | 3,0 |
| **C-1** | Gew.-Tle. | 2,3 | |
| **C-2** | Gew.-Tle. | | 2,3 |
| **E-1** | Gew.-Tle. | 0,4 | 0,4 |
| **E-2** | Gew.-Tle. | 0,4 | 0,4 |
| **E-3** | Gew.-Tle. | 0,1 | 0,1 |

| **Eigenschaften** | | | |
|---|---|---|---|
| Vicat B 120 (DIN ISO 306) | °C | 100 | 102 |
| ESC-Verhalten / [2,4%] | min:sec | 10 | 19 |
| ESC-Verhalten / [0,8%] | min:sec | 220 | 265 |
| UL 94 V 1,5mm / 2d [Bewertung] | | V 1 | vo |
| UL 94 V 1,5mm / 2d [Gesamt-NBZ] | s | 33 | 6 |
| Glühdrahtentflammbarkeitszahl GWFI bei 2,0 mm Dicke | | 800 | 960 |

| | | | |
|---|---|---|---|
| NBZ = Nachbrennzeit | | | |

## Patentansprüche

1. Zusammensetzungen enthaltend
A) 73 - 98 Gew.-Teile (jeweils bezogen auf die Summe der Gewichtsteile der Komponenten A+B+C) aromatisches Polycarbonat und/oder aromatisches Polyestercarbonat,
B) 2 bis 6 Gew-Teile (jeweils bezogen auf die Summe der Gewichtsteile der Komponenten A+B+C) kautschukmodifiziertes Pfropfpolymerisat hergestellt im Verfähren der Emulsionspolymerisation,
C) 0,1 bis 30 Gew.-Teile (jeweils bezogen auf die Summe der Gewichtsteile der Komponenten A+B+C) eines Salzes oder einer Mischung von Salzen einer Phosphinsäure der Formel (IV), 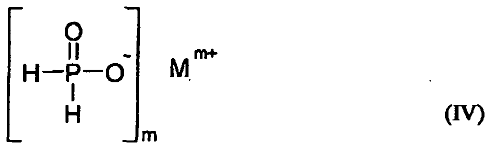 worin
M^{m+} ein Metallkation ausgewählt aus Li⁺, Na⁺. K⁺ mit m = 1), aus Mg²⁺, Ca²⁺, Sr²⁺, Ba²⁺ mit m = 2, Al³⁺ mit m = 3, und Zn²⁺, Mn²⁺, Fe²⁺ und/oder Fe³ mit m einer ganzen Zahl von 1 bis 6, und
E) Antidrippingmittel

2. Zusammensetzung gemäß Anspruch 1, enthaltend 7 bis 12 Gew.-Teile (jeweils bezogen auf die Summe der Gewichtsteile der Komponenten A+B+C) eines Salzes einer Phosphinsäure.

3. Zusammensetzung gemäß einem der Ansprüche 1 bis 2 enthaltend 0 bis 20 Gew.-Teile (bezogen auf die Summe der Gewichtsteile der Komponenten A+B+C = 100) kautschukfreies Vinyl(Co)Polymerisat und/oder Polyalkylenterephthalat als Komponente D).

4. Zusammensetzung gemäß einem der Ansprüche 1 bis 3, die frei ist von kautschukfreiem Vinyl(Co)Polymerisat und/oder Polyalkylenterephthalat

5. Zusammensetzung gemäß einem der Ansprüche 1 bis 4, enthaltend als Komponente B) ein oder mehrere Pfropfpolymerisate von
B.1 5 bis 95 Gew.-% wenigstens eines Vinylmonomeren auf
B.2 95 bis 5 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke.

6. Zusammensetzung gemäß Anspruch 5 6, enthaltend als B.1 Gemische aus
B-1-1 50 bis 99 Gew.-Teilen Vinylaromaten und/oder kernsubstituierten Vinylaromaten und/oder (Meth)Acrylsäure-(C₁-C₈)-Alkylester und
B-1-2 1 bis 50 Gew.-Teilen Vinylcyanide und/oder (Meth)Acrylsäure-(C₁-C₈)-Alkylester, und/oder Derivate ungesättigter Carbonsäuren.

7. Zusammensetzung gemäß einem der Ansprüche 1 bis 6, enthaltend ein Pfropfpolymerisat gemäß Komponente B) hergestellt im Emulsionspolymerisationsverfahren durch Redox-Initiierung mit einem Initiatorsystem aus organischem Hydroperoxid und Ascorbinsäure.

8. Zusammensetzung gemäß Anspruch 5 6, wobei das Pfropfpolymerisat B) eine Pfropfgrundlage B.2 mit einer mittleren Teilchengröße (d₅₀-Wert) von 0,2 bis 0,4 µm aufweist.

9. Zusammensetzung gemäß Anspruch 1 wobei M^{m+} = Ca²⁺ und m = 2 ist oder M^{m+} = Al³⁺ und m = 3 ist.

10. Zusammensetzung gemäß einem der Ansprüche 1 bis 9, wobei die mittlere Teilchengröße d₅₀ des Phosphinsäuresalzes (Komponente C) kleiner als 80 µm ist.

11. Zusammensetzung gemäß einem der Ansprüche 1 bis 10, wobei die Zusammensetzung frei ist von phosphorhaltigen Flammschutzmitteln ausgewählt aus den Gruppe der Mono- und oligomeren Phosphor- und Phosphonsäureester, Phosphonatamine und Phosphazene.

12. Zusammensetzung gemäß einem der Ansprüche 1 bis 11, wobei die handelsüblichen Zusatzstoffe gemäß Komponente E) Flammschutzsynergisten, von Komponente B) verschiedene kautschukmodifizierte Pfropfpolymerisate E*, Gleit- und Entformungsmittel, Nukleiermittel, Stabilisatoren, Antistatika, Säuren, Füll- und Verstärkungsstoffe sowie Farbstoffe und Pigmente sind.

13. Zusammensetzung gemäß einem der Ansprüche 1 bis 12, die frei sind an von Komponente B verschiedener Pfropfpolymerisate E*.

14. Verwendung der Zusammensetzungen gemäß Anspruch 1 bis 13 zur Herstellung von Formkörpern

15. Formkörper, enthaltend eine Zusammensetzung nach einem der Ansprüche 1 bis 13.

## Claims

1. Compositions comprising
A) from 73 to 98 parts by weight (based in each case on the entirety of the parts by weight of components A+B+C) of aromatic polycarbonate and/or aromatic polyester carbonate,
B) from 2 to 6 parts by weight (based in each case on the entirety of the parts by weight of components A+B+C) of rubber-modified graft polymer produced in the emulsion polymerization process,
C) from 0.1 to 30 parts by weight (based in each case on the entirety of the parts by weight of components A+B+C) of a salt or a mixture of salts of a phospinic acid of the formula (IV), 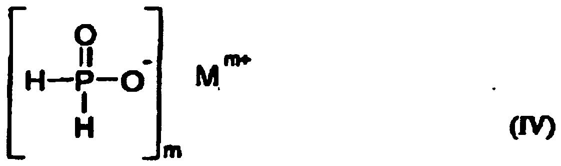 in which
M^{m+} is a metal cation selected from Li⁺, Na⁺, K⁺, where m = 1), from Mg²⁺, Ca²⁺, Sr²⁺, Ba²⁺ where m = 2, Al³⁺ where m = 3, and Zn²⁺, Mn²⁺, Fe²⁺ and/or Fe³ where m is an integer from 1 to 6, and
E) antidrip agent.

2. Composition according to Claim 1, comprising from 7 to 12 parts by weight (based in each case on the entirety of the parts by weight of components A+B+C) of a salt of a phosphinic acid.

3. Composition according to either of Claims 1 and 2 comprising from 0 to 20 parts by weight (based on the entirety of the parts by weight of components A+B+C = 100) of rubber-free vinyl (co)polymer and/or polyalkylene terephthalate as component D).

4. Composition according to any of Claims 1 to 3, which is free from rubber-free vinyl (co)polymer and/or polyalkylene terephthalate.

5. Composition according to any of Claims 1 to 4, comprising as component B) one or more graft polymers of
B.1 from 5 to 95% by weight of at least one vinyl monomer on
B.2 from 95 to 5% by weight of at least one graft base selected from the group consisting of diene rubbers, EP(D)M rubbers (i.e. those based on ethylene/propylene and optionally diene), acrylate rubbers, polyurethane rubbers, silicone rubbers, silicone-acrylate rubbers, chloroprene rubbers and ethylene/vinyl acetate rubbers.

6. Composition according to Claim 5, comprising as B.1 mixtures of
B.1.1 from 50 to 99 parts by weight of vinylaromatics and/or ring-substituted vinylaromatics and/or C1-C8-alkyl (meth)acrylates and
B.1.2 from 1 to 50 parts by weight of vinyl cyanides and/or C1-C8-alkyl (meth)acrylates, and/or derivatives of unsaturated carboxylic acids.

7. Composition according to any of Claims 1 to 6, comprising a graft polymer according to component B) produced by the emulsion polymerization process via redox initiation using an initiator system made of organic hydroperoxide and ascorbic acid.

8. Composition according to Claim 5, where the graft polymer B) has a graft base B.2 with a median particle size (d₅₀ value) of from 0.2 to 0.4 µm.

9. Composition according to Claim 1 where M^{m+} = Ca²⁺ and m = 2 or M^{m+} = Al³⁺ and m = 3.

10. Composition according to any of Claims 1 to 9, where the median particle size d₅₀ of the phosphinic salt (component C) is smaller than 80 µm.

11. Composition according to any of Claims 1 to 10, where the composition is free from phosphorus-containing flame retardants selected from the group of the mono- and oligomeric phosphoric and phosphonic esters, phosphonate amines and phosphazenes.

12. Composition according to any of Claims 1 to 11, where the commercially available additives according to component E) are flame retardant synergists and the following: pigments and dyes, and also reinforcing materials and fillers, acids, antistatic agents, stabilizers, nucleating agents, mould-release agents and lubricants and rubber-modified graft polymers E* differing from component B).

13. Composition according to any of Claims 1 to 12, which is free from graft polymers E* differing from component B.

14. Use of the compositions according to any of Claims 1 to 13 for producing mouldings.

15. Mouldings comprising a composition according to any of Claims 1 to 13.

## Revendications

1. Compositions contenant
A) 73 à 98 parties en poids (à chaque fois par rapport à la somme des parties en poids des composants A + B + C) de polycarbonate aromatique et/ou de polyestercarbonate aromatique,
B) 2 à 6 parties en poids (à chaque fois par rapport à la somme des parties en poids des composants A + B + C) de polymère greffé modifié par du caoutchouc, préparé par un procédé de polymérisation en émulsion,
C) 0,1 à 30 parties en poids (à chaque fois par rapport à la somme des parties en poids des composants A + B + C) d'un sel ou d'un mélange de sels d'un acide phosphinique de formule (IV), 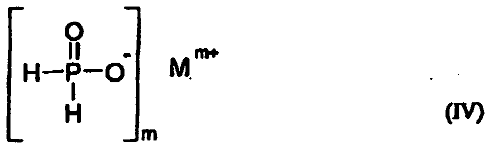 où
M^{m+} représente un cation métallique choisi parmi Li⁺, Na⁺, K⁺ avec m = 1, parmi Mg²⁺, Ca²⁺, Sr²⁺, Ba²⁺ avec m = 2, Al³⁺ avec m = 3, et Zn²⁺, Mn²⁺, Fe²⁺ et/ou Fe³ avec m valant un nombre entier de 1 à 6, et
E) un agent anti-goutte.

2. Composition selon la revendication 1, contenant 7 à 12 parties en poids (à chaque fois par rapport à la somme des parties en poids des composants A + B + C) d'un sel d'un acide phosphinique.

3. Composition selon l'une quelconque des revendications 1 à 2 contenant 0 à 20 parties en poids (par rapport à la somme des parties en poids des composants A + B + C = 100) de (co)polymère de vinyle exempt de caoutchouc et/ou de poly(téréphtalate d'alkylène) comme composant D).

4. Composition selon l'une quelconque des revendications 1 à 3, qui est exempte de (co)polymère de vinyle exempt de caoutchouc et/ou de poly(téréphtalate d'alkylène).

5. Composition selon les revendications 1 à 4, contenant, comme composant B), un ou plusieurs polymères greffés de
B.1 5 à 95% en poids d' au moins un monomère de vinyle sur
B.2 95 à 5% en poids d'au moins une base de greffage choisie dans le groupe constitué par les caoutchoucs de diène, les caoutchoucs d'EP(D)M, (c'est-à-dire ceux à base d'éthylène/propylène et le cas échéant de diène), les caoutchoucs d'acrylate, de polyuréthane, de silicone, de silicone-acrylate, de chloroprène et d'éthylène/acétate de vinyle.

6. Composition réticulable selon la revendication 5, contenant comme B.1 des mélanges de
B.1.1 50 à 99 parties en poids d'aromatiques de vinyle et/ou d'aromatiques de vinyle à noyau substitué et/ou d'esters (C₁-C₈)-alkyliques de l'acide (méth)acrylique et
B.1.2 1 à 50 parties en poids de vinylcyanures et/ou d'esters (C₁-C₈)-alkyliques de l'acide (méth)acrylique et/ou de dérivés d'acides carboxyliques insaturés.

7. Composition selon l'une quelconque des revendications 1 à 6, contenant un polymère greffé selon le composant B), préparé par un procédé de polymérisation en émulsion par initiation redox avec un système d'initiation constitué par un hydroperoxyde organique et de l'acide ascorbique.

8. Composition selon la revendication 5, le polymère greffé B) présentant une base de greffage B.2 présentant une grosseur de particule moyenne (valeur dso) de 0, 2 à 0, 4 µm.

9. Composition selon la revendication 1, M^{m+} = Ca²⁺ et m = 2 ou M^{m+} = Al³⁺ et m = 3.

10. Composition selon l'une quelconque des revendications 1 à 9, la grosseur moyenne des particules d₅₀ du sel de l'acide phosphinique (composant C) étant inférieure à 80 µm.

11. Composition selon l'une quelconque des revendications 1 à 10, la composition étant exempte d'agents ignifuges contenant du phosphore, choisis dans le groupe des esters monomères et oligomères de l'acide phosphorique et phosphonique, des phosphonate-amines et des phosphazènes.

12. Composition selon l'une quelconque des revendications 1 à 11, les additifs usuels du commerce selon le composant E) étant des synergistes ignifuges, des polymères greffés E* modifiés par du caoutchouc, différents du composant B), des lubrifiants et des agents de démoulage, des agents de nucléation, des stabilisateurs, des antistatiques, des acides, des charges et des substances de renforcement ainsi que des colorants et des pigments.

13. Composition selon l'une quelconque des revendications 1 à 12, qui est exempte de polymères greffés E* différents du composant B.

14. Utilisation des compositions selon la revendication 1 à 13 pour la production de corps moulés.

15. Corps moulés contenant une composition selon l'une quelconque des revendications 1 à 13.
